# EUROPEAN PATENT APPLICATION

(11) **EP 4 763 807 A1**
(43) Date of publication of application: **24.06.2026**
(21) Application number: 24221628.1
(22) Date of filing: 19.12.2024
(51) Int. Cl.: C02F 1/00

(54) **FILTER CARTRIDGE FOR THE FILTRATION OF A LIQUID AND USE THEREOF**

(71) Applicant: BRITA SE, 65232 Taunusstein (DE)
(72) Inventor: Münch, Jonathan, 65232 Taunusstein (DE)

(57) **Abstract**

A filter cartridge 7 for the filtration of a liquid comprises at its upper end a lid 71. The lid 71 comprises a rigid portion and is designed at least in sections to correspond to the bottom 33 of the funnel 3, so that the filter cartridge 7 can be pushed against the bottom of the funnel 3 for formation of a sealed operating position, in which a sealing is formed between the bottom 33 of the funnel and a top surface of the lid 71 in a contact region 45 for sealing. The lid 71 further comprises a flexible portion 74 adjacent to the rigid portion and more flexible than the rigid portion that is resiliently deformable such that the top surface of the lid 71 is resiliently deformed in a contact region 45 for further adaptation to the profile of the bottom 33 of the funnel in a sealed operating position to exert an additional bias in the contact region 45.

The flexible portion enables a purposely selective deformation of basically only the flexible portion, whereas the adjacent at least one more rigid portion is not deformed. This enables to build up an additional biasing force in the contact region that results in a more snuggle fitting of the top surface of the lid to the bottom of the funnel in the contact region and thus in a more uniform and fluid-tight formation of a sealing in the contact region.

## Description

### FIELD OF INVENTION

The present invention generally relates to filter cartridges for the filtration of a liquid such as water, and more specifically relates to a filter cartridge for a filtering device for the filtration of a liquid, in particular for the gravity-driven filtration of a liquid, and a use thereof.

### BACKGROUND OF INVENTION

Such filtering devices are used as water filters for daily use in households, in which case they are also called table water filters. They are primarily used for clearing tap water of unwanted substances, inter alia of chlorine and hardness builders such as calcium and magnesia, but also lead. Such table water filters are usually gravity-driven and comprise a funnel for collecting the water to be filtered and a filter cartridge releasably connected to the bottom of the funnel with a sealing element clamped between the bottom of the funnel and a top surface of the filter cartridge in a contact region for sealing. Besides the pouring of tap water into the water filter, no extra work is necessary for filtering the water. The water simply flows downwards through the filter cartridge and into a downstream receptacle for the filtered water due to the gravitational force.

EP 3 838 374 A1 discloses an example for such a gravity-driven filtering device. At the top of the filter cartridge a bayonet-type connecting mechanism is provided for coupling the top of the filter cartridge with the bottom of the funnel. Annular sealings are provided in a contact region between the top surface of the filter cartridge and the bottom of the funnel. These sealings are provided directly adjacent to the bayonet-type connecting mechanism. In the contact region both the bottom of the funnel and the top surface of the filter cartridge are relatively stiff. To achieve a reliable sealing, the annular sealings need to be relatively thick and usually have a complex configuration, which results in increased costs. It is difficult to get a grip on mechanical tolerances.

WO 2013 139 821 A discloses a filter cartridge to be disposed underneath a funnel and comprising a central inlet opening. The filter cartridge is mounted to the bottom of the funnel by means of a bayonet-type connecting mechanism disposed at the rim forming the central inlet opening. In the region of the rim also a sealing member is provided, which is compressed for sealing when tightening the bayonet-type connecting mechanism. Both the rim and the bottom of the funnel need to be stiff.

DE 10 2010 063 088 B3 discloses the coupling of a filter cartridge with the bottom of a funnel by means of a bayonet-type connecting mechanism provided at the bottom of the funnel and including sealing members. In the region of mechanical coupling both the bottom of the funnel and the top of the filter cartridge need to be stiff.

### SUMMARY OF INVENTION

It is an object of the present invention to provide a filter cartridge for a filtering device for the filtration of a liquid such as water that enables a reliable sealing in a sealed operating position using a simple and cost-effective sealing structure. Further aspects of the present related to the use of such a filter cartridge in a filtering device for the filtration of a liquid and to a filtering device including such a filter cartridge.

These problems are solved by a filter cartridge as claimed in claim 1, by the use of such a filter cartridge as claimed in claim 13, and by a filtering device as claimed in claim 14. Further advantageous embodiments are the subject-matter of the dependent claims.

According to the present invention there is provided a filter cartridge for a filtering device for the filtration of a liquid, particularly for the gravity-driven filtration of a liquid, wherein the filtering device comprises a funnel for collecting the liquid to be filtered, said filter cartridge comprising a housing in which a filter material for filtration of the liquid is accommodated, and a lid having an inlet opening for the liquid to be filtered and covering an upper end of the filter cartridge, wherein the filter material is accommodated in the filter cartridge, the lid comprises a rigid portion and is designed to correspond at least in sections to the bottom of the funnel, so that the filter cartridge can be pushed against the bottom of the funnel for formation of a sealed operating position, in which a sealing is formed between the bottom of the funnel and a top surface of the lid in a contact region. According to the present invention the lid further comprises a flexible portion adjacent to the rigid portion and that is more flexible than the rigid portion. The flexible portion can be resiliently deformed such that the top surface of the lid is resiliently deformed in the contact region for further adaptation of the profile of the lid to the profile of the bottom of the funnel in the sealed operating position to thereby exert an additional bias in the contact region.

The general principle of the present invention resides in a particular modification of the design of the lid of filter cartridges, to include sections of different shape, curvature, and material thickness etc., to thereby provide a flexible portion in the contact region that is directly adjacent to at least one more rigid portion and that is more flexible than the at least one more rigid portion provided adjacent to the flexible portion. Introducing such a flexible portion enables a purposely selective deformation of basically only the flexible portion, whereas the adjacent at least one more rigid portion is not deformed. This enables to build up an additional biasing force in the contact region that results in a more snuggle fitting of the top surface of lid to bottom of the funnel in the contact region and thus in a more uniform formation of sealing in the contact region. The sealing element required for this purpose can thus be provided less thick and with a less complex configuration, resulting in lower costs and a more reliable handling.

The more flexible portion is circumferential and may be formed by an annular portion surrounding each of the at least one inlet opening provided in the lid, wherein the annular portion may less thick than the adjacent at least one stiffer portion. Further measures that make the at least one stiffer portion stiffer than the adjacent flexible portion are in particular the material and thickness of the at least one stiffer portion, the provision of stiffening structures, such as stiffening ribs, and the shape of the at least one stiffer portion.

According to a further embodiment, the sealing is formed by clamping a sealing element between the bottom of the funnel and the top surface of the lid in the contact region, wherein the lid is configured so that the additional bias in the contact region is exerted on the sealing element in the contact region, causing a further and/or a more uniform compression of the sealing element. In other words, the sealing element is a separate member clamped between the bottom of the funnel and the top surface of the lid in the contact region, wherein the clamping causes a certain deformation of the sealing element and the additional bias results in a stronger and/or more uniform compression of the sealing element for formation of the sealing.

According to an alternative embodiment, the sealing is formed by the resilient deformation of the flexible portion of the lid itself in the sealed operating position, wherein the lid is configured for a direct abutment of the flexible portion of the lid against the bottom of the funnel in the contact region. In other words, the sealing element is formed by a more flexible portion of the lid itself, which can be accomplished by a suitable selection of the material, geometric configuration and shape etc. of the lid, in particular in the region where the sealing is to be formed. The sealing is formed by direct abutment of the flexible portion against (a portion of) the bottom of the funnel and an adequate resilient deformation of this flexible portion, when the filter cartridge is pushed towards the bottom of the funnel for establishing the sealed operating position. Such a more flexible may be formed integrally with the lid and of the same material. Or, such a more flexible portion may also be formed by inserting or injection-molding a more flexible material into an annular groove or similar structure on the top surface of the lid.

According to a further embodiment, the lid is configured in such a manner that a position of the rigid portion remains substantially unchanged in axial direction when the sealed operating position is formed while the flexible portion is displaced or flexed relative to the rigid portion towards a bottom of the filter cartridge when resiliently deformed. This further helps to more precisely locate the additional biasing force in the contact region. Of course, also the at least one adjacent rigid portion may also be deformed slightly, when the lid takes the sealed operating position. However, such a deformation will be much smaller than the purposely selective deformation introduced in the flexible portion, so that it can generally be neglected.

According to a further embodiment, the rigid portion is formed by an edge of the lid projecting radially outward beyond the housing of the filter cartridge, in particular beyond a side wall forming the housing of the filter cartridge. Thus, in the sealed operating position the edge of the lid can be supported easily in an axial direction by an external member, such as the upper edge of an external cup accommodating the filter cartridge or an extension of the bottom of the funnel. Such an edge may also be formed to be much thicker and mechanically stable than the flexible portion to adjust the mechanical properties of the lid, and may also be used to connect a side wall of the filter cartridge with the lid, e.g. by ultrasonic welding or bonding.

According to a further embodiment, the flexible portion of the lid is convexly curved in a home position, and the edge of the lid is formed as a circumferential flange that is thicker than the flexible portion, wherein the convexly curved flexible portion is configured to be resiliently deformed towards the bottom of the filter cartridge to form the sealed operating position, when the filter cartridge is coupled to the bottom of the funnel. In particular, the flexible portion may serve as a hinge enabling a pivoting of the outer edge of the lid from the relaxed home position to the sealed operating position.

According to a further embodiment, the inlet opening is formed by an edge at a center of the lid adjacent to the convexly curved flexible portion, wherein the edge of the inlet opening is circumferential and curved towards the bottom of the filter cartridge so that it will be stiffer than the convexly curved flexible portion. The edge of the inlet opening will thus have a relatively small radius of curvature and thus be automatically stiffer than the adjacent flexible portion. Stiffness of this section can be designed easily by choice of material and design parameters, such as material thickness and shape, in particular radius of curvature.

According to an alternative embodiment, the flexible portion is formed by a circumferential edge of the lid, which protrudes in a relaxed home position radially outward beyond the housing or side wall of the filter cartridge and that is slightly inclined in a direction away from the bottom of the filter cartridge, wherein the rigid portion is formed at the center of the lid, and the circumferential edge is configured to be resiliently deformed towards the bottom of the filter cartridge when resiliently deformed. The thickness of the lid may decrease towards the outer edge of the lid, so that the flexible portion will be automatically formed at the outer edge of the lid. In particular, the thickness of the lid may decrease continuously towards the outer edge of the lid. When the lid takes the sealed operating position when the filter cartridge is coupled to the bottom of the funnel, the inclined edge will be flexed and bent a little to better conform to the profile of the funnel bottom in the contact region. Bending of flexing the outer edge of the lid with a relatively small radius of curvature may assist in establishing a relatively high extra biasing force in the sealed operating position, which further assists in obtaining a reliable sealing effect.

According to a further embodiment, the rigid portion is mushroom-shaped, which enables a relatively high stiffness even with a thin material. This mushroom-shaped portion may be connected to the circumferential edge of the lid by an annular concavely-shaped (bowl-shaped) intermediate portion, which will also be relatively thick and can serve as a hinge for the pivotal displacement and flexing of the outer edge of the lid towards the sealed operating position.

According to a further embodiment, the annular concavely-shaped intermediate portion is formed by a plurality of radial webs, wherein a plurality of radial slots is formed between the radial webs in the top surface of the lid to define the inlet port.

According to a further embodiment, the bottom of the filter cartridge comprises at least one stiff portion and a supporting member is provided that connects the bottom with the rigid portion of the lid, for supporting the rigid portion in axial direction. The stiff portion of the bottom may be formed by additional stiffening webs, such as radial stiffening webs connecting the supporting member with an outer rim of the side wall of the filter cartridge, that may be connected to the material forming the bottom of the filter cartridge. This material may be a non-woven mat or mat of fibers. As an alternative, the stiff portion of the bottom of the filter cartridge may be formed as a fluid-pervious porous body with or without additional stiffening measures, such as radial webs.

According to a further embodiment, the top surface of the lid in the contact region is configured such that, when the filter cartridge is connected to the funnel, it can be elastically deformed inwardly by a predetermined distance, which is determined by the geometry and material properties of the lid and is preferably in the range between 1 and 5 mm, more preferably in the range between 2 mm and 3 mm, and may be in particular of the order of only 2 mm or 3 mm.

According to a further embodiment, the lid of the filter cartridge is formed in one piece of a plastic material, e.g. by injection molding or punching from a sheet material, and a cylindrical housing that accommodates the filter material is connected to the lid.

According to a further embodiment, the housing of the filter cartridge is cylindrical and formed by a sheet-like membrane.

A related aspect of the present invention relates to the use of a filter cartridge as outlined above in a filtering device for the filtration of a liquid, particularly for the gravity-driven filtration of a liquid, wherein the filtering device comprises a funnel for collecting the liquid to be filtered and a sealing element is provided on a bottom of the funnel or on the top surface of the lid, in which use the filter cartridge is pressed against the bottom of the funnel to form a sealed operating position, in which a sealing is formed between the bottom of the funnel and the top surface of the lid in a contact region between the between the bottom of the funnel and the top surface of the lid in a contact region. Such a sealing may be formed by clamping a sealing element between the bottom of the funnel and the top surface of the lid in the contact region, wherein the flexible portion is resiliently deformed in the contact region for further adaptation to the profile of the bottom of the funnel in the sealed operating position to exert an additional bias on the sealing member. Such a sealing may also be formed by direct abutment of the resiliently deformed flexible portion of the lid against (a corresponding portion of) the bottom of the funnel.

A related aspect of the present invention relates to a filtering device for the filtration of a liquid, particularly for the gravity-driven filtration of a liquid, comprising a funnel for collecting the liquid to be filtered, comprising a filter cartridge as outlined above for filtering the liquid, wherein the filtering device is configured such that the filter cartridge can be pressed against the bottom of the funnel to form the sealed operating position as outlined above.

According to a further embodiment, the sealing element is made of an elastomeric material and is formed to be circumferential to encircle the at least one inlet opening provided in the lid, wherein the elastomeric material is inserted or injection molded by two-component injection molding into at least one circumferential groove or similar structure formed in the bottom of the funnel or on the top surface of the lid in the contact region.

### OVERVIEW ON DRAWINGS

Hereinafter, the preferred embodiments according to the present invention will be described in an exemplary manner and with reference to the accompanying drawings, wherein:
- Fig. 1: is a schematic exploded view showing the main components of a filtering device according to a first embodiment of the present invention;
- Fig. 2: is a schematic cross-sectional view of a filter cartridge according to the first embodiment of the present invention;
- Fig. 3a: is a magnified cross-sectional view showing the contact region between the filter cartridge and funnel of the filtering device according to the first embodiment of the present invention in a relaxed home position;
- Fig. 3b: shows the contact region of Fig. 3a in an assembled use position (sealed operating position);
- Figs. 4a and 4b: show a comparison of the upper end of a filter cartridge according to the first embodiment of the present invention in the relaxed home position and in the assembled use position;
- Fig. 5: is a schematic exploded view showing the main components of a filtering device according to a second embodiment of the present invention;
- Fig. 6: is a schematic cross-sectional view of a filter cartridge according to the second embodiment of the present invention;
- Fig. 7a: is a magnified cross-sectional view showing the contact region between the filter cartridge and funnel of the filtering device according to the second embodiment of the present invention in a relaxed home position;
- Fig. 7b: shows the contact region of Fig. 7a in an assembled use position (sealed operating position); and
- Figs. 8a and 8b: show a comparison of the upper end of a filter cartridge according to the second embodiment of the present invention in the relaxed home position and in the assembled use position.

Throughout the drawings, the same or similar elements and the elements having same or similar functions are denoted by like reference numerals. The embodiments described herein with reference to the drawings are explanatory, illustrative, and used to generally understand the present disclosure. The embodiments shall not be construed to delimit the present disclosure.

### DETAILED DESCRIPTION OF PREFERRED EMBODIMENTS

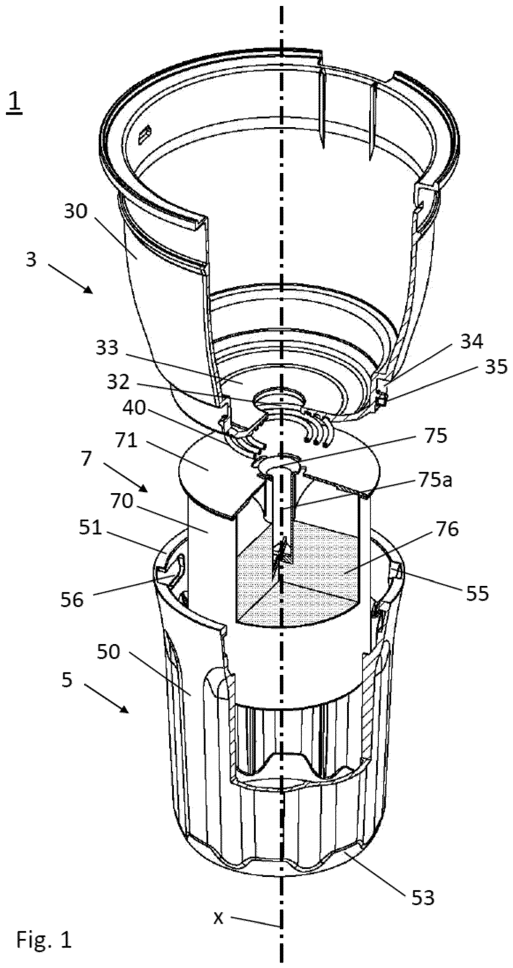

Fig. 1 shows a first embodiment of a filtering device 1, which comprises as main components at least a funnel 3 and a filter cartridge 7. In this example the filtering device 1 also comprises a cup 5 which is not absolutely necessary and accommodates the filter cartridge 7 therein. In an assembled use position (hereinafter `sealed operating position'), the filter cartridge 7 is coupled to the bottom 33 of the funnel 3 as outlined below. The open upper end of the funnel 3 usually will be covered by a cover comprising a central opening covered by a lid, through which water to be filtered can be poured into the funnel 3. The filtering device 1 will usually be accommodated in a jug, which collects the filtered water pouring out of the filter cartridge 7 or out of the cup 5 via an outlet opening. In this example the filtering device 1 is configured for the gravity-driven filtration of water, where gravity drives the flow of liquid from the funnel 3 via the filter cartridge 7 and the cup 5 towards the jug (not shown).

The upper end of the filter cartridge 7 is covered by a lid 71, which is circular and comprises an inlet 75 that is aligned with a central opening 32 formed in the bottom 33 of the funnel 3 in the operating position. To avoid a bypass of unfiltered water into a jug below the filter cartridge 7 and to achieve a controlled filtering operation, in the operating position a sealing element 40 is clamped between the bottom 33 of the funnel 3 and the top surface of the lid 71 in a contact region for sealing.

The main components 3, 5 and 7 of the filtering device 1 are shown in Fig. 1 to have a circular cross-section and to be aligned along a central axis x in the sealed operating position. Of course, these components 3, 5 and 7 may also have e.g. an elliptical cross-section.

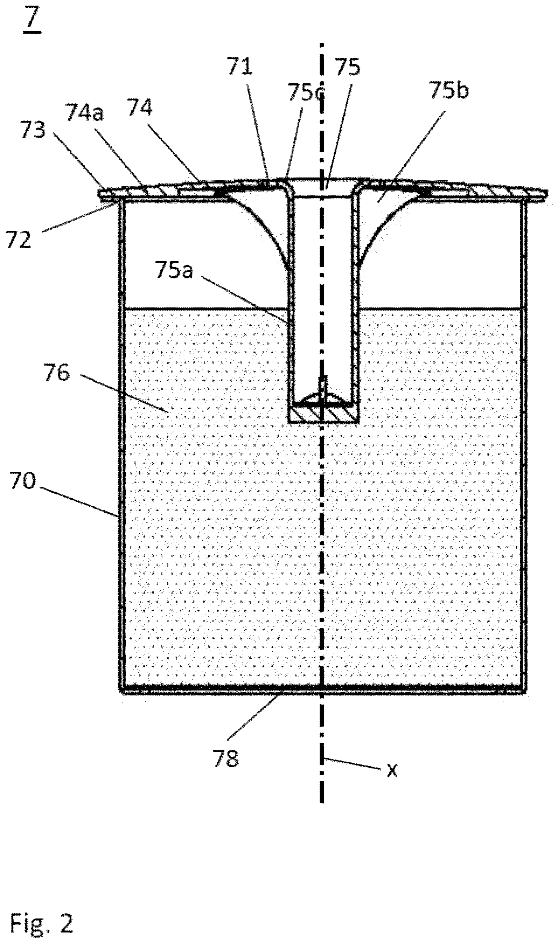

As shown in Fig. 2, the filter cartridge 7 is generally of cylindrical shape formed by a circumferential side wall 70 and a bottom 78 together forming a housing in which a filter medium 76 is accommodated. The side wall 70 and bottom 78 are not necessarily formed of a stiff material. At least the side wall 70 may also be formed of a flexible, pliable sheet material, such as a membrane, that may be pervious to fluids, whereas the bottom 78 is fluid-pervious and may be embodied as a porous body pervious to fluids and stiff enough to support the remainder of the cartridge, but may also further include stiffening structures as outlined below. An example of such a filter cartridge is disclosed in more detail in WO 2017 097 494 A1 of the applicant, the whole content of which is hereby incorporated by reference. As shown in Fig. 2, the filter medium 76 is accommodated in the filter cartridge 7 that is used for filtering the water, e.g. by a diffusive process, such as elution or sorption (which for present purposes includes ion exchange). Thus, the filter medium 76 may include e.g. activated carbon, activated aluminum, a zeolite, KDF (an alloy of copper and zinc). Such a filter medium 76 usually is without a fixed shape as a collective, and hence needs to be supported in radial direction by the side wall 70 and in axial direction by the bottom 78 of the filter cartridge 7.

As shown in Fig. 2, in the first embodiment the lid 71 generally has a slightly convex shape in a relaxed home position and in this example includes a relatively thin portion 74 that is convexly curved and generally may have a uniform thickness. This portion 74 is circular or annular. The lid further comprises a thicker portion 74a that surrounds the circular portion 74 and has a planar bottom surface. A circular edge 73 at the free end of the thicker portion 74a protrudes radially outwards beyond the side wall 70 (or housing of the filter cartridge 7) and may form a planar circular flange. In the example shown in Fig. 2, the upper end of the side wall 70 includes a planar circular flange 72 that is, however, optional, and may be used for connecting the flange-like circular edge 73 with the upper end of the side wall 70, e.g. by ultra-sonic welding or bonding. In other embodiments, where the side wall 70 is formed e.g. of a pliable sheet-like material, the flange-like circular edge 73 may be used for connecting the side wall 70 directly with the flange-like circular edge 73.

In the center of the lid 71 a central inlet opening 75 is formed by an edge 75c that may be curved towards the bottom 78. The edge 75c may be extended further towards the bottom 78 by an inlet tube 75a extending in axial direction. The edge 75c of the central inlet opening 75 is relative stiff because of the relatively small radius of curvature forming the inlet opening 75 and may be further stiffened by a plurality of curved stiffening ribs 75b that may be arranged at equiangular spacings in a centro-symmetric configuration. The lid 71 thus comprises an annular convexly curved flexible portion 74 that is relatively thin and disposed between two directly adjacent stiffer portions, namely the stiff portion formed by the thicker planar portion 74 and the relatively stiff edge 75c defining the central opening 75. As shown in Fig. 2 the overall shape of the lid 71 is relatively flat and the total height of the convexly curved lid 71 may be of the order of just a few millimeters, e.g. in the range between 2 mm and 5 mm, or even smaller, e.g. about 2 to 3 mm.

In operation the filter cartridge 7 is firmly coupled to the bottom 33 of the funnel and accommodated in the cup 5 via a coupling mechanism, such as a bayonet-mechanism or other types of form-fitting coupling mechanisms. The cup 5 itself may be coupled directly to the bottom 33 of the funnel 3, but may also be coupled only to the filter cartridge 7. More details of such a coupling are omitted here, to streamline the disclosure. The bottom 78 of filter cartridge 7 usually does not rest on the bottom 53 of the cup 5.

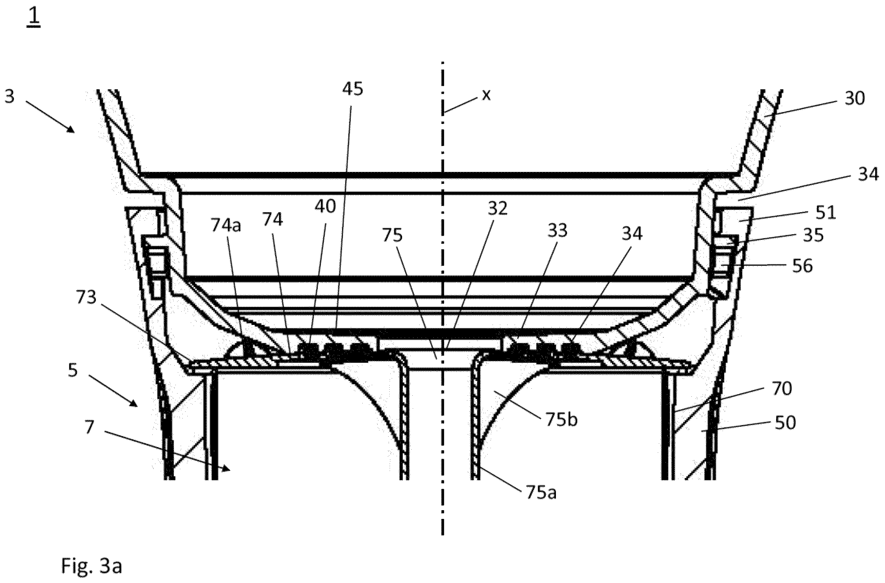

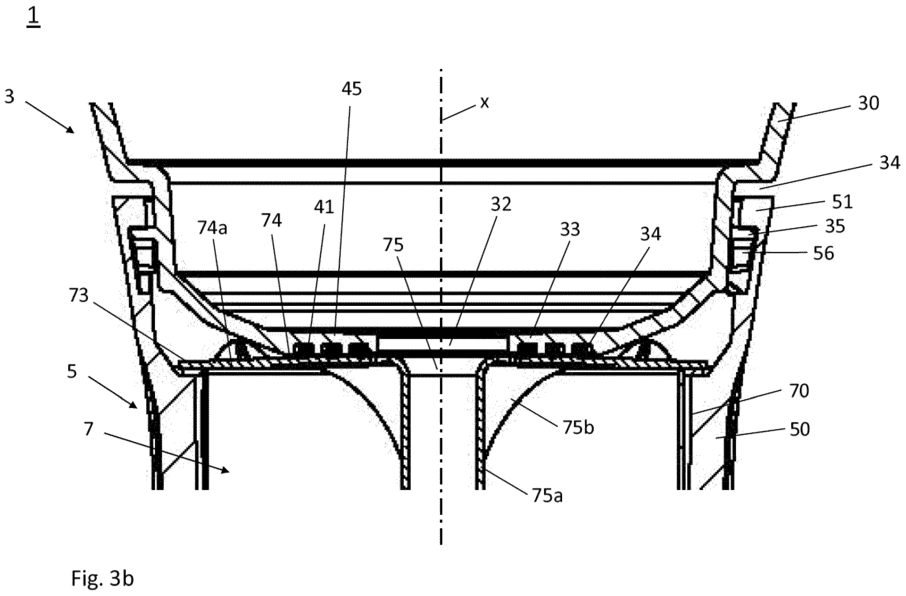

The contact region 45 between the lid 71 of the filter cartridge 7 and the bottom 33 of the funnel 3 is shown in magnified views in Figs. 3a and 3b in a relaxed home position and in an assembled use position (also named `sealed operating position'). In this embodiment, the filter cartridge 7 is coupled directly with the bottom 33 of the funnel 3, and the cup 5 is coupled with the filter cartridge 7, but not with the funnel 3. At least one annular groove 41 is formed at the underside of the bottom 33 (in this example three annular grooves), and a sealing ring 40 is disposed in this at least one groove 41. The contact region 45 is formed around this at least one groove 41 and at least one sealing ring 40 and is thus an annular region including the region where the at least one sealing ring 40 is supported. In this embodiment, the edge 73 of the lid 71 abuts the upper edge 51 of the cup 5 in the sealed operating position to be supported in axial direction and take a fixed position, but such an axial support is not essential.

When the filter cartridge 7 is mounted to the funnel 3 to take the sealed operating position, the sealing elements 40 are compressed in axial direction x in the contact region to seal the lid 71 against the bottom 33 of the funnel 3 and the upper end 51 of the cup 5 so that there will be no bypass for unfiltered water. Rather, the water to be filtered will enter the interior of the filter cartridge 7 via the inlet 75, will then pass the filter medium inside the filter cartridge 7 and will exit the filter cartridge 7 via the side wall 70, if this side wall 70 should be pervious to water, and/or at least via the bottom 78, which is pervious to water, and will then enter the cup 5 from where the filtered water flows via an outlet in the bottom 53 of the cup 5 to an underneath collecting container.

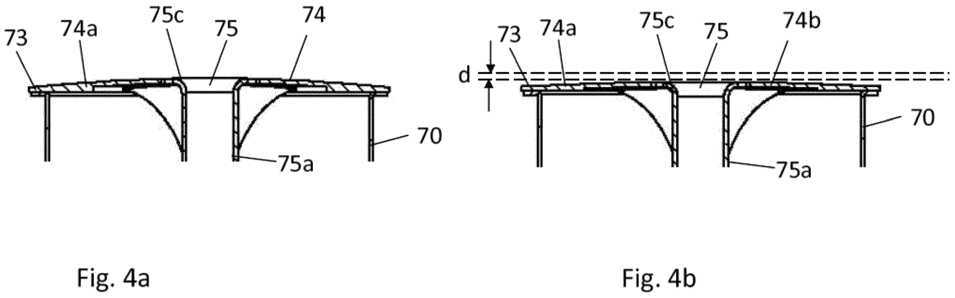

As can be concluded from a comparison of Figs. 3a and 3b and Figs. 4a and 4b, respectively, when the filter cartridge 7 is mounted to the funnel 3 to take the sealed operating position, the edge 73 of the lid 71 remains at the same axial position whereas the central portion with the edge 75c around the inlet 75 is displaced a little downward toward the bottom of the filter cartridge, and the flexible portion 74 of the lid 71 is resiliently deformed in the contact region 45 to thereby further adapt to the profile of the bottom 33 of the funnel 3 in the sealed operating position. In this manner, an additional bias is exerted on the sealing rings 40 that will compress the sealing rings 40 specifically in the contact region and ensure a reliable sealing effect. More specifically, as shown in Figs. 3a and 4a, in the relaxed home position the top surface of lid 71 is slightly convexly curved and yet does not perfectly match the more or less planar bottom 33 of the funnel 3 in the contact region 45. In the sealed operating position, however, both the region around the edge 73 and around the edge 75c of the inlet 75 is generally not deformed, whereas only the flexible portion 74 is resiliently flexed a little downward to take a basically planar configuration (or a less convexely curved shape) which better matches the planar profile of the bottom 33 of the funnel 3 in the contact region 45. This flexing or deformation, which is in axial direction x, will result in an additional biasing force that further compresses the sealing rings 40. Hence, the shape of the lid 71 enables a purposely selective deformation of the flexible portion 74 to build-up an additional biasing force that results in a more snuggle fitting of the top surface of lid 71 to bottom 33 of the funnel 3 in the contact region 45 and thus in a more uniform compression of the sealing rings 40.

Figs. 4a and 4b show the lid 71 in magnified views in the relaxed home position and in the sealed operating position, respectively. It can be seen, that the flexible portion 74 is deformed from the convexly curved shape of Fig. 4a to a generally planar shape shown in Fig. 4b, whereas the edge 73 rests at the same axial position and the central edge 75c around the inlet is displaced downward by a distance d that may be in the range between 1 mm and 5 mm, more preferably in the range between 2 mm and 4 mm, and may be of the order of only 2 mm or 3 mm. According to the present invention relatively thin sealing elements of a simple configuration can be used, which enables lower production and maintenance costs and a more reliable sealing effect.

While it has been disclosed above that the edge 73 and around the edge 75c of the inlet 75 is generally not deformed when the lid 71 takes the sealed operating position, it will become apparent to the skilled person that a minor residual deformation of these portions may also occur when the lid 71 takes the sealed operating position, which residual deformation will, however, be much smaller than the purposely selective deformation of the flexible portion 74.

In another embodiment, the curved stiffening ribs 74b around inlet tube 74a may result in formation of an intermediate zone 74b that is also relatively stiff so that the flexible portion 74 will be a relatively narrow annular portion between the outer ends of the stiffening ribs 74b and the planar stiff portion 74a. This may cause the planar stiff portion 74a to basically pivot about the narrow annular flexible portion 74 serving as a hinge, when the filter cartridge 7 is mounted to the funnel 3 and the lid is transferred from the relaxed home position to the sealed operating position.

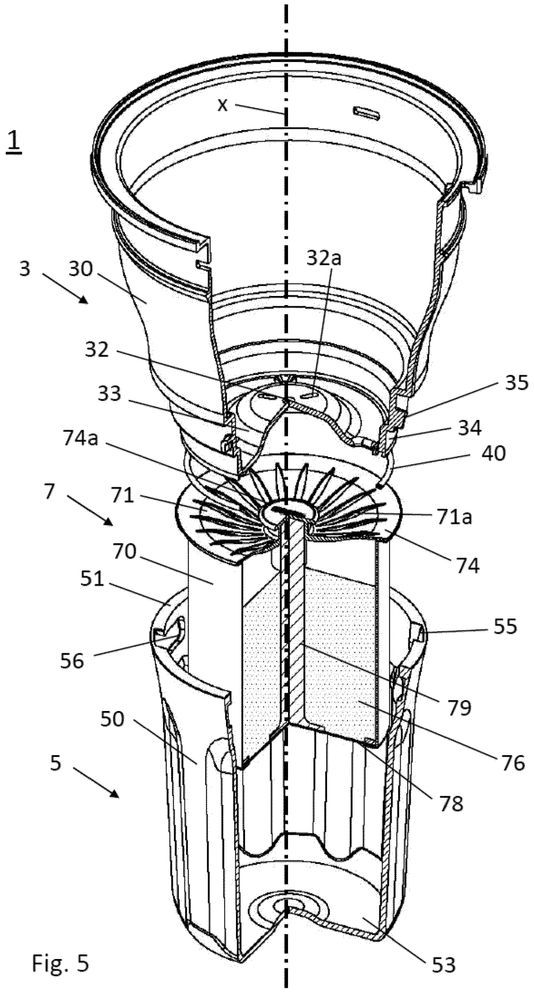

In the following, a second embodiment of a filter cartridge 7 will be described with reference to Figs. 5 to 8b. In this second embodiment, the lid 71 is of such a shape and configuration that the purposely selective deformation of a flexible portion of the lid is induced at and near the radial outer edge of the lid. In the second embodiment, the bottom 33 of funnel 3 may be dome-shaped to protrude upward into the funnel 3. However, in the outer contact region 45 the bottom 33 forms a more or less planar annular surface. A plurality of slots 32a and a central opening 32 are formed in the dome-shaped portion of the funnel 3 through which the water collected in funnel 3 may flow into the underneath filter cartridge 7 via a plurality of radial slots 71a.

In the second embodiment an internal supporting structure may be provided to enable a firm axial support of the central portion of lid 71 as well as to prevent a sagging of the bottom 78 of the filter cartridge. For this purpose, a central supporting pillar 79 may be provided that is connected to the bottom 78 and supports the central portion of lid 71. An outer ring 79a that may be of plastic material is connected to the bottom 78 and side wall 70, and a plurality of extensions 79a extend radially outwards from the lower end of supporting pillar 79, preferably at equiangular spacing. The radial extensions 79a may form radial spokes that are connected to the outer support ring 79b. The radial extensions 79a may be connected to the bottom 78 e.g. by ultrasonic welding or bonding so that the bottom 78 may be relatively stiff and can thus be formed by a non-woven mat or mat of fibers but still reliably prevent the bottom 78 from sagging, which could otherwise result in formation of an undesired bypass or blocking of an outlet hole in the bottom 53 of the cup 5.

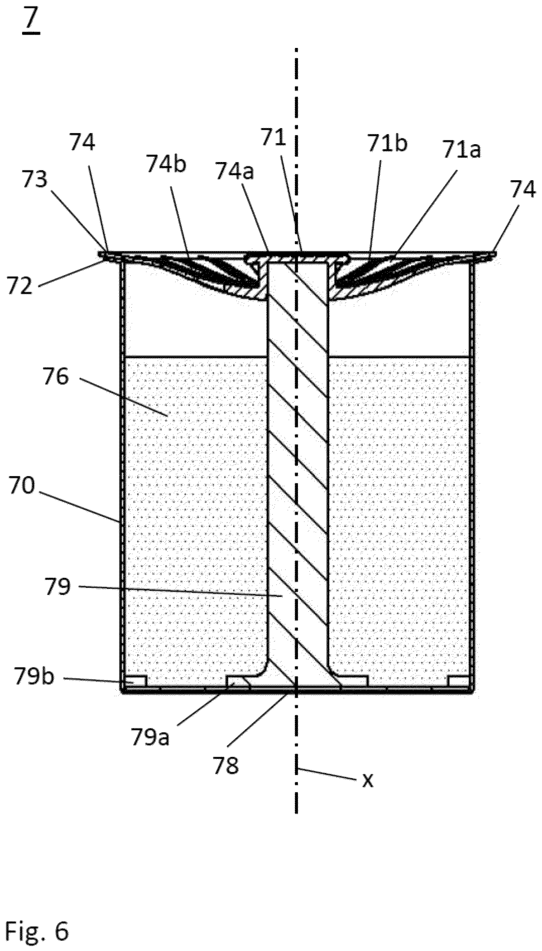

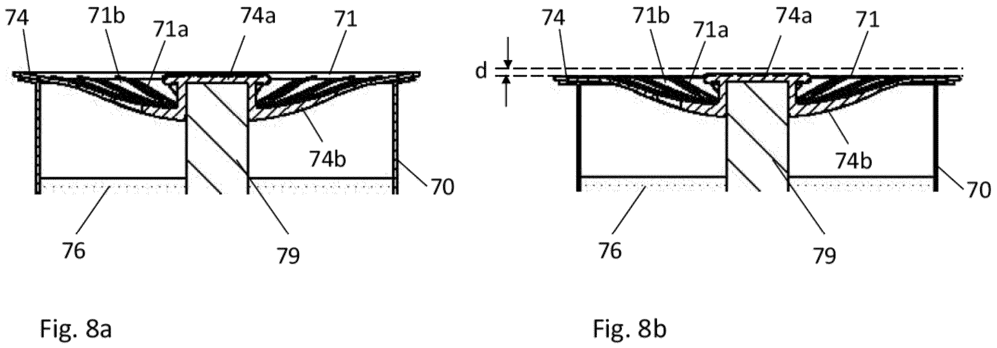

As shown in Fig. 6, the central portion 74a of lid 71 is mushroom-shaped and connected to the central supporting pillar 79 so that a relatively stiff portion 74a is formed in the center of lid 71 that will remain generally at a fixed level in axial direction. As shown in Figs. 5 and 6, an annular intermediate zone 74b is formed around the stiff central portion 74a and has in this example a concave bowl-shape. The annular intermediate zone 74b may be formed by a plurality of radial webs 71b and by a plurality of radial slots 71a formed in-between. The flexible portion 74 is formed by the outer edge 73 of lid 71 that may protrude radially outward beyond the side wall 70 and that is slightly inclined in a direction away from the bottom 78 of the filter cartridge 7 in the relaxed home position shown in Figs. 6 and 8a. Both the intermediate zone 74b and the outer edge 73 of lid 71 are more flexible than the stiff central portion 74a. And the outer edge 73 of lid 71 is preferably more flexible than the intermediate zone 74b, as the thickness of the radial webs 71b continuously decreases in radial direction.

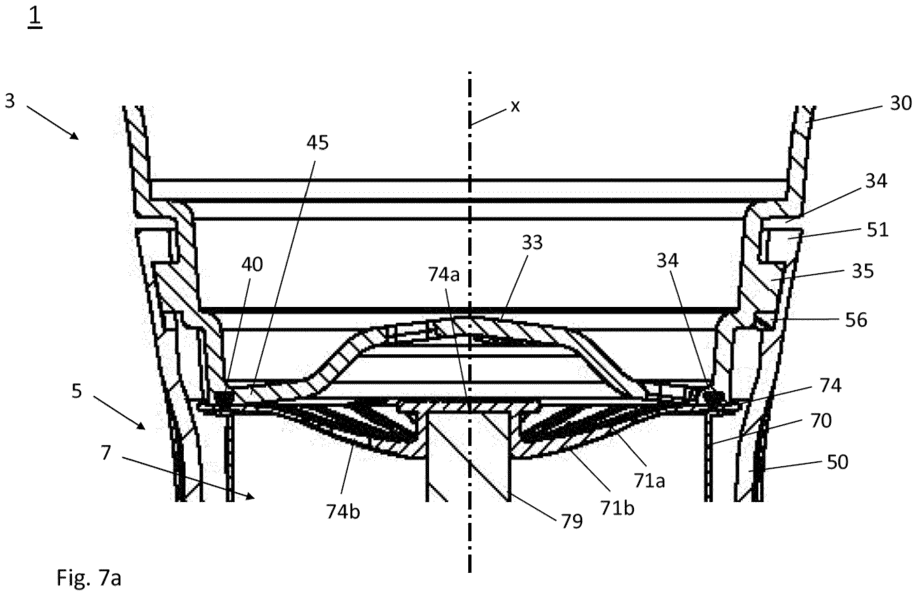

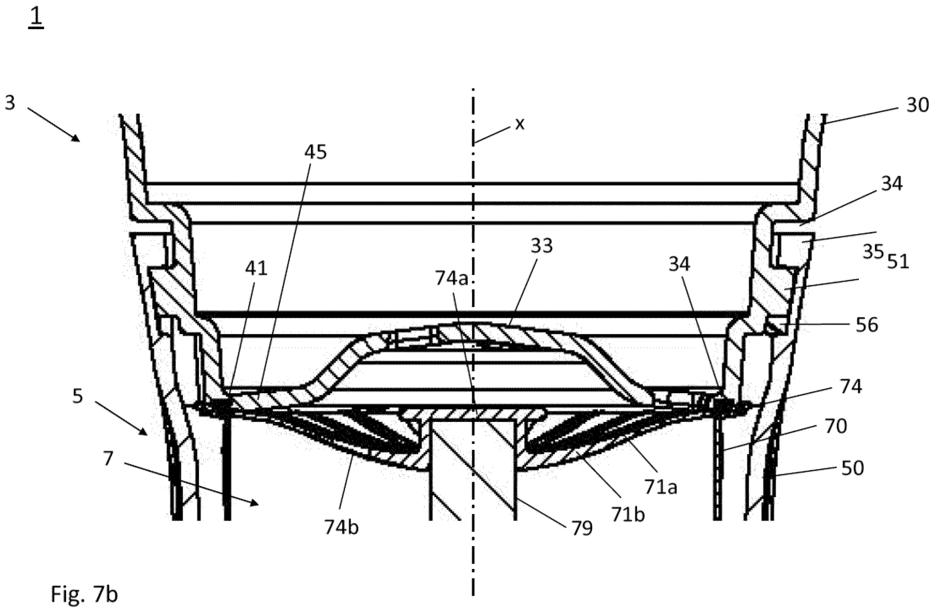

As can be concluded from a comparison of Figs. 7a and 7b, when the filter cartridge 7 is mounted to the funnel 3 to take the sealed operating position, the stiff central portion 74a and the main portion of the intermediate zone 74b, in particular that part that is directly adjacent to the stiff central portion 74a, will remain at the same axial level relative to the bottom of the filter cartridge, whereas the annular edge 73 and the radially outer part of the intermediate zone 74b are resiliently deformed and flexed, e.g. towards the bottom of the filter cartridge, by a distance d shown in Fig. 8b that may of the order of just about 2 mm to 3 mm, and generally may be in the range between 1 mm and 5 mm, more preferably in the range between 2 mm and 3 mm. In the sealed operating position shown in Figs. 7b and 8b, the whole top surface of lid 71 is basically planar and thus more snuggly matches the profile of the bottom 33 of funnel 3 in the contact region 45 as in the relaxed home position.

Resilient deformation of the annular edge 73 and of the radially outer part of the intermediate zone 74b results in an additional biasing force exerted on the sealing ring 40 in the contact region 45 that will compress the sealing ring 40 and ensure a reliable sealing effect in the contact region 45. More specifically, as shown in Fig. 8a, in the relaxed home position the annular edge 73 and the radially outer part of the intermediate zone 74b are slightly inclined in a direction away from the bottom of the filter cartridge 7 and yet do not perfectly match the more or less planar bottom 33 of the funnel 3 in the contact region 45. In the sealed operating position, the central stiff portion 74a is not deformed. Only the flexible portion 74 formed by the annular edge 73 and the radially outer part of the intermediate zone 74b is resiliently flexed a little downward to the level of the central stiff portion 74a to take a basically planar configuration which better matches the planar profile of the bottom 33 of the funnel 3 in the contact region 45. Hence, the shape of the lid 71 at its edge 73 enables to introduce a purposely selective deformation of the flexible portion 74 to build-up an additional biasing force that results in a more snuggle fitting of the top surface of lid 71 to bottom 33 in the contact region 45 and thus in a more uniform compression of the sealing ring 40.

While it has been disclosed above that the central stiff portion 74a is generally not deformed when the lid 71 takes the sealed operating position, it will become apparent to the skilled person that a minor residual deformation of the central stiff portion 74a may also occur when the lid 71 takes the sealed operating position, which residual deformation will, however, be much smaller than the purposely selective deformation at least of the annular edge 73.

It will become apparent from the above disclosure that the side wall 70 of the filter cartridge 7 may also be of a stiff plastic material and could also be used to support the outer edge 73 of lid 71 in axial direction. In other embodiments, the outer edge 73 of lid 71 may be supported in axial direction by an upper edge 51 of the outer cup 5. According to the present invention, the shape and in particular the profile of the lid 71 are configured such that a relatively flexible portion 74 is formed that is more flexible than at least one adjacent portion, such as regions 73 and 75c in the first embodiment (cf. Fig. 2) or the radially outer part of the intermediate zone 74b in the second embodiment (cf. Fig. 6), enabling a purposely selective deformation of the flexible portion 74 to build-up an additional biasing force that results in a more snuggle fitting of the top surface of lid 71 to bottom 33 in the contact region 45 and thus in a more uniform compression of the at least one sealing ring 40 provided in the contact region 45. Different shapes of the lid 71 may also be used, depending on the overall shape of the corresponding bottom 33 of the funnel 3.

### LIST OF REFERENCE NUMERALS

- 1: filtering device

- 3: funnel

- 5: cup

- 7: filter cartridge

- 30: side wall

- 32: central opening
- 32a: slot
- 33: bottom
- 34: peripheral recess in side wall 30
- 35: locking protrusion

- 40: sealing ring
- 41: annular groove

- 45: contact region

- 50: side wall
- 51: top edge

- 53: bottom

- 55: axial groove
- 56: locking groove

- 70: side wall
- 71: lid
- 71a: radial slot
- 71b: radial web
- 72: flange
- 73: rim of lid 71
- 74: flexible portion of lid 71
- 74a: stiff portion
- 74b: intermediate zone of lid 71
- 75: inlet
- 75a: inlet tube
- 75b: stiffening rib
- 75c: edge of inlet 75
- 76: filter medium

- 78: bottom
- 79: central supporting pillar
- 79a: radial extension
- 79b: outer support ring

- d: compression distance
- x: central axis

## Claims

1. A filter cartridge (7) for a filtering device (1) for the filtration of a liquid, the filtering device (1) comprising a funnel (3) for collecting the liquid to be filtered, said filter cartridge (7) comprising:
a housing (70) in which a filter material (76) for filtration of the liquid is accommodated, and
a lid (71) having an inlet opening (75) for the liquid to be filtered and covering an upper end of the filter cartridge (7), wherein
the lid (71) comprises a rigid portion (73, 75c; 71b, 74a) and is designed to correspond at least in sections to a bottom (33) of the funnel (3), so that the filter cartridge (7) can be pushed against the bottom of the funnel (3) for formation of a sealed operating position, in which a sealing is formed between the bottom (33) of the funnel and a top surface of the lid (71) in a contact region (45),
**characterized in that** the lid (71) further comprises a flexible portion (74) adjacent to the rigid portion (73, 75c; 71b, 74a) and more flexible than the rigid portion (73, 75c; 71b, 74a), wherein the flexible portion (74) is resiliently deformable such that the top surface of the lid (71) is resiliently deformed in the contact region (45) for further adaptation to the profile of the bottom (33) of the funnel in the sealed operating position to exert an additional bias in the contact region (45).

2. The filter cartridge as claimed in claim 1, wherein
the sealing is formed by clamping a sealing element (40) between the bottom (33) of the funnel and the top surface of the lid (71) in the contact region (45) and the lid (71) is configured so that the additional bias in the contact region (45) is exerted on the sealing element (40) in the contact region (45); or
the sealing is formed by the resilient deformation of the flexible portion (74) of the lid (71) in the sealed operating position and the lid (71) is configured for a direct abutment of the flexible portion (74) of the lid (71) against the bottom (33) of the funnel (3) in the contact region (45).

3. The filter cartridge as claimed in claim 1 or 2, wherein the lid (71) is configured so that a position of the rigid portion (73, 75c; 71b, 74a) remains substantially unchanged in axial direction when the sealed operating position is formed while the flexible portion (74) is displaced or flexed relative to the rigid portion (73, 75c; 71b, 74a) towards a bottom (78) of the filter cartridge when resiliently deformed.

4. The filter cartridge as claimed in claim 3, wherein the rigid portion is formed by an edge (73) of the lid (71) projecting radially outward beyond the housing (70).

5. The filter cartridge as claimed in claim 4, wherein
the flexible portion (74) of the lid (71) is convexly curved in a home position, and
the edge (73) of the lid is formed as a circumferential flange that is thicker than the flexible portion (74), wherein
the convexly curved flexible portion (74) is configured to be resiliently deformed towards the bottom (78) of the filter cartridge (7) to form the sealed operating position.

6. The filter cartridge as claimed in claim 5, wherein
the inlet opening (75) is formed by an edge (75c) at a center of the lid (71) adjacent to the convexly curved flexible portion (74) and
the edge (75c) of the inlet opening (75) is circumferential and curved towards the bottom (78) of the filter cartridge to be stiffer than the convexly curved flexible portion (74).

7. The filter cartridge as claimed in claim 3, wherein
the flexible portion (74) is formed by a circumferential edge of the lid (71), which protrudes in a relaxed home position radially outward beyond a side wall (70) of the housing and slightly inclined in a direction away from the bottom (78) of the filter cartridge (7),
the rigid portion (74a) is formed at the center of the lid (71), and
the circumferential edge is configured to be resiliently deformed towards the bottom (78) of the filter cartridge when resiliently deformed.

8. The filter cartridge as claimed in claim 7, wherein the rigid portion (74a) is mushroom-shaped and connected to the circumferential edge of the lid (71) by an annular concavely-shaped intermediate portion.

9. The filter cartridge as claimed in claim 8, wherein
the annular concavely-shaped intermediate portion is formed by a plurality of radial webs (71b) and
a plurality of radial slots (71a) is formed between the radial webs (71b) in the top surface of the lid (71) to define the inlet port (75).

10. The filter cartridge as claimed in any of claims 3 to 9, wherein the bottom (78) of the filter cartridge (7) comprises at least one stiff portion and a supporting member (79) is provided that connects the bottom (78) with the rigid portion (71b, 74a) of the lid (71), for supporting the rigid portion (71b, 74a) in axial direction.

11. The filter cartridge as claimed in any of the preceding claims, wherein the top surface of the lid (71) in the contact region (45) is configured such that, when the filter cartridge (7) is connected to the funnel (3), it can be elastically deformed inwardly by a predetermined distance (d) which is determined by the geometry and material properties of the lid (71) and is preferably in the range between 1.0 mm and 5.0 mm, more preferably in the range between 2.0 mm and 3.0 mm.

12. The filter cartridge as claimed in any of the preceding claims, wherein
the lid (71) of the filter cartridge (7) is formed in one piece of a plastic material, and
the housing that accommodates the filter material (76) is a cylindrical housing connected to the lid (71), wherein the cylindrical housing is preferably formed by a sheet-like membrane.

13. A use of a filter cartridge (7) as claimed in any of the preceding claims in a filtering device (1) for the filtration of a liquid, wherein the filtering device (1) comprises a funnel (3) for collecting the liquid to be filtered and a sealing element (40) is provided on a bottom (33) of the funnel or on the top surface of the lid (71), wherein
the filter cartridge (7) is pressed against the bottom of the funnel (3) to form a sealed operating position, in which the sealing element (40) is clamped between the bottom (33) of the funnel and the top surface of the lid (71) in a contact region (45) to form a sealing, and
the flexible portion (74) is resiliently deformed in the contact region (45) for further adaptation to the profile of the bottom (33) of the funnel in the sealed operating position to exert an additional bias on the sealing member (40).

14. A filtering device (1) for the filtration of a liquid, comprising a funnel (3) for collecting the liquid to be filtered,
**characterized by** a filter cartridge (7) as claimed in of claims 1 to 12 for filtering the liquid, wherein
the filtering device (1) is configured such that the filter cartridge (7) can be pressed against the bottom of the funnel (3) to form the sealed operating position, in which a sealing is formed between the bottom (33) of the funnel and a top of the lid (71) in the contact region (45) to form by clamping a sealing element (40) between the bottom (33) of the funnel and the top surface of the lid (71) in the contact region (45) or by direct abutment of the resiliently deformed flexible portion (74) of the lid (71).

15. The filtering device as claimed in claim 14, wherein the sealing element (40) that is clamped between the bottom (33) of the funnel and the top surface of the lid (71) in the contact region (45) is made of an elastomeric material, formed to be circumferential and inserted or is injection molded by two-component injection molding into at least one circumferential groove that is formed in the bottom (33) of the funnel (3) or on the top surface of the lid (71) in the contact region (45).
